# EUROPEAN PATENT SPECIFICATION

(11) **EP 3 506 235 B1**
(45) Date of publication and mention of the grant of the patent: **17.03.2021**
(21) Application number: 18215073.0
(22) Date of filing: 21.12.2018
(51) Int. Cl.: G08G 1/01, G08G 1/052, G01P 3/64

(54) **SYSTEM AND METHOD FOR MEASURING THE LENGTH OF A ROAD SECTION**
SYSTEM UND VERFAHREN ZUR MESSUNG DER LÄNGE EINES STRASSENABSCHNITTS
SYSTÈME ET PROCÉDÉ DE MESURE DE LA LONGUEUR D'UNE SECTION DE ROUTE

(30) Priority: 27.12.2017 IT 201700149851
(43) Date of publication of application: 03.07.2019
(73) Proprietor: AUTOSTRADE TECH S.p.A., 00159 Roma (IT)
(72) Inventor: FABBRIZI, Emanuele, 00159 ROMA (IT)
(74) Representative: Pietra, Giulia

(56) References cited:
- WO-A1-95/05644
- DE-A1-102011 013 550
- DE-A1-102011 086 299
- RU-C1- 2 589 802
- Anonymous: "Decreto Ministeriale numero 282 del 13-06-2017", Ministero delle Infrastrutture e dei Trasporti , 13 June 2017 (2017-06-13), XP002784852, Retrieved from the Internet: URL:http://www.mit.gov.it/sites/default/fi les/media/normativa/2017-07/decreto_minist eriale_del_13-06-2017.pdf [retrieved on 2018-09-18]

## Description

### Technical field

The present invention generally relates to the field of traffic services. In particular, the present invention relates to a system and a method for measuring the length of a road section.

### Background art

Systems for measuring the average speed of vehicles on road and motorway sections are known. These systems are intended to detect any violations of speed limits provided by law.

In particular, the SICVe (Speed Control Information System) system - also known as "Tutor" or "Vergilius" - is widespread on the Italian motorway network. The SICVe system - similarly to other known systems for measuring the average speed of vehicles - comprises a plurality of peripheral stations distributed along the roads and a central server connected to them. The peripheral stations detect information about vehicles in transit (for example, vehicle class, photo of the vehicle license plate) and record the transit time of each vehicle. The central server collects information from the peripheral stations and calculates the average speed of the vehicles to determine any violations of the speed limits provided by law.

The average speed for a vehicle is calculated in known way, as the ratio between the distance (i.e. the length of the road section comprised) between two peripheral stations to the difference between the transit times of the vehicle at the two peripheral stations.

The measurement of the length of the road section between two peripheral stations is therefore a prerequisite for the correct functioning of a system for measuring the average speed of vehicles. Said measurement must be performed with precision, as it is a reference to establish if a violation of the speed limit has occurred and therefore if it is necessary to apply one of the sanctions provided by law.

The measurement of the length of the road section between two peripheral stations is typically carried out using a traveled distance meter installed on-board a sample vehicle, which travels along the road section to determine its length.

In particular, the SICVe system currently provides that the sample vehicle travels along the road section, positioning itself along one of the two edges of the carriageway. Along the straight lines, the sample vehicle can travel on either edges of the carriageway, while along the curves the sample vehicle travels on the inner edge of the curve. Since a road section generally includes curves in both directions (right and left), in order to maintain the inner edge of the curve the sample vehicle crosses the road diagonally in the straight sections between one curve and another.

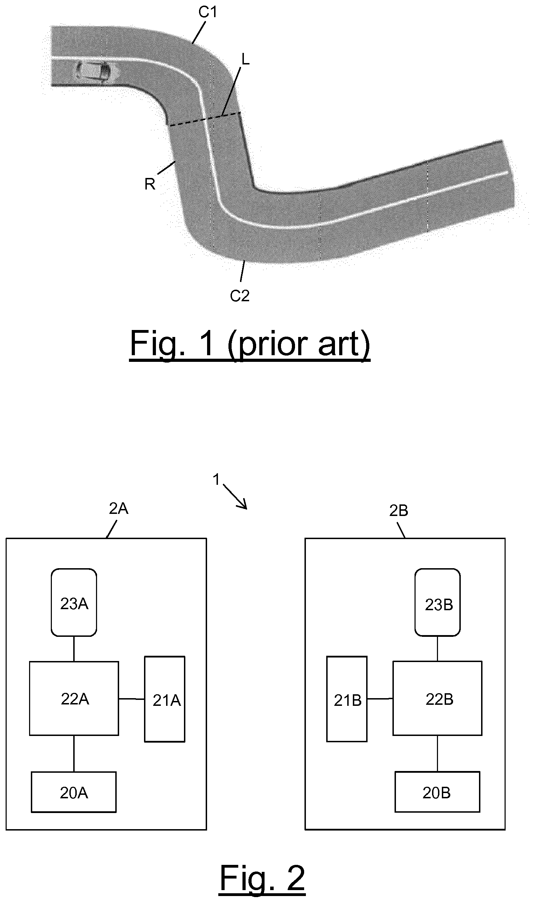

The Decree n. 282 of 13 June 2017 of the Italian Ministry of Infrastructures and Transport, chapter 4.3 provides that the length of the road section to be used for measuring the average speed to detect any violations of speed limits established by law is calculated as shown in Figure 1. Along the curves, the length of the inner edge of the carriageway must always be considered and, to move from one edge to the other one along the straight line R that separates two curves C1 and C2 with opposite directions, it is not considered a diagonal, but a line L perpendicular to the straight line direction. The length of this line L is not considered in the calculation of the overall length of the road section. Therefore to perform this measurement, the sum of the lengths of several physically separated portions of the road section shall be calculated, and not the length of a single continuous line from the beginning to the end of the road section.

DE 10 2011 086299 discloses a method determining information about feasibility of overtaking maneuver based on sensor information of an environment sensor system.

RU2589802 discloses a method for determining average speed of vehicle movement in section of road, having curvilinear segments.

DE 10 2011 013550 discloses a method for detecting time-encoded positional data of a measuring section in a continuous manner, where time encoded position values of a global positioning system (GPS) receiver are detected by utilizing frequency of 50-100 hertz during acquisition of the time-encoded positional data.

### Summary of the invention

In view of the above, the Applicant has tackled the problem of providing a system and a method for measuring the length of a road section that allows the measurement to be carried out according to the provisions of Decree n. 282 of 13 June 2017, chapter 4.3 of the Italian Ministry of Infrastructures and Transport, without requiring the closure to traffic of the road section, nor the installation of construction sites along the road section.

According to embodiments of the present invention, this problem is solved by a system for measuring the length of a road section which comprises a pair of on-board devices, each of which is suitable for being installed on-board a respective vehicle. Each on-board device comprises an overtaking sensor which provides information indicative of any overtaking between the vehicle on which it is installed and the other vehicle, a traveled distance meter and a processing unit. In each on-board device, when a first overtaking between the two vehicles is detected (for example, the vehicle on which the on-board device is installed has overtaken the other vehicle) on the basis of the information provided by the overtaking sensor, the processing unit enables the measurement of the distance that the vehicle is traveling by the traveled distance meter. When the same on-board device detects a second overtaking opposite to the first overtaking (namely, the vehicle on which the on-board device is installed has been overtaken by the other vehicle) on the basis of the information provided by the overtaking sensor, the processing unit disables the measurement of the distance that the vehicle is traveling by the traveled distance meter.

In the following description and in the claims, the expression "second overtaking opposite to the first overtaking between two vehicles" indicates the situation in which one of the two vehicles, after being overtaken by the other one (first overtaking), overtakes it again.

Advantageously, this system allows to measure the length of a road section according to the provisions of Decree n. 282 of 13 June 2017, chapter 4.3 of the Italian Ministry of Infrastructure and Transport.

To perform the measurement according to the aforementioned Decree, the two on-board devices of the system are installed on two vehicles which are then driven along the road section to be measured so that (i) each one travels the road section to be measured along a respective edge (right or left) of the carriageway; (ii) at each curve of the road section, the vehicle which is traveling along the inner edge of the curve is in an advanced position with respect to the other; and (iii) on straight lines separating two curves with opposite directions, the vehicle which was in an advanced position along the previous curve is overtaken by the other vehicle.

In this way, the two on-board devices installed on the two vehicles provide a measure of the length of the road section according to the aforementioned Decree. With reference to the exemplary road section shown in Figure 1, indeed, along the first curve C1 to the right, the vehicle that travels along the right edge of the carriageway (also briefly called "right vehicle") is in an advanced position with respect to the other vehicle (also briefly called "left vehicle") and its on-board device has enabled the measurement of the distance that the right vehicle is traveling. At any point on the straight line R, the right vehicle allows the left vehicle to overtake it, so that the latter will be in an advanced position at the entrance of curve C2 to the left. At the time of overtaking, the on-board device of the right vehicle detects that it has been overtaken by the left vehicle, and thus disables the measurement of the distance travelled by the right vehicle. At the same time, the on-board device of the left vehicle detects that it has overtaken the right vehicle, and thus enables the measurement of the distance travelled by the left vehicle.

Therefore, for the entire road section, only one on-board device at a time has the measurement of the distance traveled by the respective vehicle enabled. The switching between enabled measurement status and disabled measurement status occurs in a synchronized way on the two on-board devices, and is triggered by the overtaking between the two vehicles that each of the two on-board devices is able to detect independently.

At the end of the road section, the overall length of the road section according to the aforementioned Decree can be calculated by adding the distance traveled by the right vehicle as measured overall by its on-board device and the distance traveled by the left vehicle as measured overall by its on-board device.

The system of the present invention has several advantages.

First of all, it allows to measure the length of the road section without requiring the closure to traffic of the road section, nor the installation of roadside work zones along the road section. To perform the measurement it is sufficient indeed that the two vehicles with the two installed on-board devices travel once along the two opposite sides of the carriageway of the road section to be measured, overtaking each other between opposite curves as described above. This operation can also be carried out under normal traffic conditions on the road section, without any limitation to the other vehicles circulation (for example lane closure) and without the need to measure at times during which the traffic conditions are particularly reduced (for example at night).

Moreover, since the vehicles with the on-board devices are not required to cross the carriage (each one travels along its own edge for the entire road section to be measured), no potentially dangerous situations are created for the other vehicles in transit.

According to a first aspect, a system for measuring the length of a road section is provided, comprising two on-board devices each one suitable for being installed on board a respective vehicle, each on-board device comprising:
- an overtaking sensor configured to provide information indicative of any overtaking between the vehicle on board of which the on-board device is installed and the other vehicle on board of which the other on-board device is installed;
- a traveled distance meter suitable for measuring the distance traveled by the vehicle; and
- a processing unit configured to:
   - when it detects a first overtaking between the vehicle and the other vehicle on the basis of the information provided by the overtaking sensor, enable a measurement of the distance that the vehicle is traveling along the road section by the traveled distance meter; and
   - when it detects a second overtaking opposite to said first overtaking between the vehicle and the other vehicle on the basis of the information provided by the overtaking sensor, disable the measurement of the distance that the vehicle is traveling along the road section by the traveled distance meter,
   wherein the first overtaking is such that the vehicle overtakes the other vehicle and the second opposite overtaking is such that the vehicle is overtaken by the other vehicle, or wherein the first overtaking is such that the vehicle is overtaken by the other vehicle and the second opposite overtaking is such that the vehicle overtakes the other vehicle.

Preferably, the overtaking sensor comprises:
- a laser source suitable for emitting a laser beam; and
- two photodetectors,
the laser source being interposed between the two photodetectors along a horizontal line which, when the on-board device is installed on board the vehicle, is parallel to a travel direction of the vehicle.

Preferably, the laser beam is a laser blade arranged on a vertical plane.

Preferably, the processing unit of each on-board device is configured to determine if the vehicle has overtaken the other vehicle or if the vehicle has been overtaken by the other vehicle according to the order in which the two photodetectors of the overtaking sensor of the on-board device detect another laser beam coming from the overtaking sensor of the other on-board device.

Optionally, each on-board device further comprises a respective user device provided with a graphical interface through which an operator on board the vehicle may interact with the on-board device.

According to a second aspect, the present invention provides a method for measuring the length of a road section, the method comprising driving two vehicles provided with respective on-board devices along two opposite edges of the road section and, at each on-board device:
a) detecting any overtaking between the vehicle on board of which the on-board device is installed and the other vehicle on board of which the other on-board device is installed;
b) when a first overtaking is detected between the vehicle and the other vehicle, enabling a measurement of the distance that the vehicle is traveling along the road section; and
c) when a second overtaking is detected opposite to the first overtaking between the vehicle and the other vehicle, disabling the measurement of the distance that the vehicle is traveling along the road section,
wherein the first overtaking is such that the vehicle overtakes the other vehicle and the second opposite overtaking is such that the vehicle is overtaken by the other vehicle, or wherein the first overtaking is such that the vehicle is overtaken by the other vehicle and the second opposite overtaking is such that the vehicle overtakes the other vehicle.

Preferably, the method comprises, before the entry to each curve of the road section, determining which vehicle between the two vehicles is located on the inner edge of the curve and drive it to an advanced position with respect to the other vehicle which is on the outer edge of the curve so as to overtake it, so that:
- the measurement of the distance that the vehicle on the inner edge of the curve is traveling is enabled; and
- at the same time, the measurement of the distance that the vehicle on the outer edge of the curve is traveling is disabled.

Preferably, the method comprises calculating the length of the road section as the sum of the overall distances measured along said road section for the two vehicles.

Preferably, the road section is included between two peripheral stations of a system for measuring the average speed of vehicles.

### Brief description of the drawings

The present invention will become clearer from the following detailed description, provided by way of example and not of limitation, to be read with reference to the attached drawings, wherein:
- Figure 1 (already described above) schematically shows the measurement of the length of a road section according to the provisions of Decree n. 282 of 13 June 2017, chapter 4.3 of the Italian Ministry of Infrastructures and Transport;
- Figure 2 schematically shows a system for measuring the length of a road section, according to an embodiment of the present invention;
- Figure 3 shows in greater detail the structure of an overtaking sensor included in each of the on-board devices of the system of Figure 2;
- Figure 4 shows an exemplary road section whose length can be measured using the system according to embodiments of the present invention;
- Figure 5 is a flow chart of the operation of the system for measuring the length of a road section, according to an embodiment of the present invention; and
- Figures 6a-6d schematically show different steps of the measurement of the length of the road section of Figure 4.

### Detailed description of preferred embodiments of the invention

Figure 1 schematically shows a system 1 for measuring the length of a road section according to an embodiment of the present invention.

The system 1 preferably comprises two on-board devices 2A, 2B suitable for being installed on board two vehicles to be driven along the road section to be measured.

Each on-board device 2A, 2B preferably comprises a traveled distance meter 20A, 20B, an overtaking sensor 21A, 21B and a processing unit 22A, 22B.

Each traveled distance meter 20A, 20B is suitable for measuring the distance traveled by the vehicle on board of which the on-board device 2A, 2B is installed. The traveled distance meter 20A, 20B may be, by way of non-limiting example, an optical odometer. The traveled distance meter 20A, 20B is preferably suitable to be fixed to the exterior of the vehicle, for example to its towing hook. For example, the Applicant has obtained positive results using a Correvit L-350 Aqua odometer from the company Kistler Instrumente GmbH (Germany).

The overtaking sensors 21A, 21B are preferably configured to detect possible overtaking between the two vehicles on which the on-board devices 2A, 2B are installed.

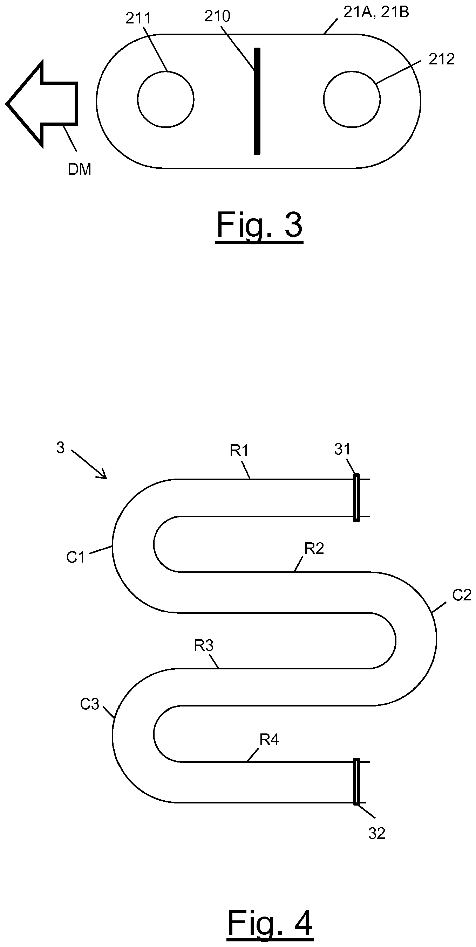

The structure of an overtaking sensor 21A, 21B according to an embodiment of the present invention is shown in Figure 3.

Each overtaking sensor 21A, 21B preferably comprises a laser source 210 suitable for emitting a laser beam. The laser beam is preferably a laser blade arranged on a vertical plane. In this way, it is ensured that the sensors 21A, 21B are able to detect the overtaking even when the two vehicles, on board of which the on-board devices 2A, 2B are installed, travel on carriageways which are at slightly different heights (tilted road surface). For example, the laser source 210 may comprise a laser diode with an infrared (IR) emission wavelength, for example between 600 nm and 700 nm, followed by a line generating lens, for example a Powell line generator.

Each overtaking sensor 21A, 21B preferably further comprises a pair of photodetectors 211, 212. The laser source 210 and the photodetectors 211, 212 have barycentre preferably aligned along a horizontal line which, when the overtaking sensor 21A, 21B is installed on board of the respective vehicle, is parallel to the direction of travel of the vehicle, indicated schematically by the arrow DM in Figure 3. In this way, one of the two photodiodes 211, 212 (for example, the photodiode 211) precedes the other in the travel direction DM of the vehicle. As shown in Figure 3, the laser source 210 is preferably interposed between the two photodetectors 211, 212. Each photodetector 211, 212 is preferably suitable for detect laser pulses at the emission wavelength of the laser source 210.

Returning to Figure 2, within each on-board device 2A, 2B, the control unit 22A, 22B is preferably a computer connected to both the traveled distance meter 20A, 20B and the overtaking sensor 21A, 21B so as to receive the information they generate, as will be discussed in more detail below. The computer is preferably provided with a control software which manages the measurement logic. Each control unit 22A, 22B can be implemented, for example, by using the CompactRIO system.

Optionally, each on-board device 2A, 2B can also be provided with a respective user device 23A, 23B provided with a graphical interface through which the operator driving the vehicle on which the on-board device 2A, 2B is installed may interact with the on-board device itself, as it will be described in more detail below. Each user device 23A, 23B is connected to the respective control unit 22A, 22B via a wired or wireless connection.

The operation of the system 1 for measuring the length of a road section will now be described in detail.

To measure the length of a road section as currently provided by the aforementioned Decree, the measurement start point and the end point are first selected. If the road section is delimited by two peripheral stations of a system for measuring the average speed of vehicles, the measurement start point and end point coincide with the positions of the peripheral stations. Preferably, the measurement start point and the end point are marked by the installation of fixed references (for example stakes), preferably located outside the carriageway.

Figure 4 shows an exemplary road section 3, in which the measurement start point 31 and the measurement end point 32 are marked. By way of example only, the road section 3 comprises a first straight line R1, a first left curve C1, a second straight line R2, a second right curve C2, a third straight line R3, a third left curve C3 and a fourth straight line R4.

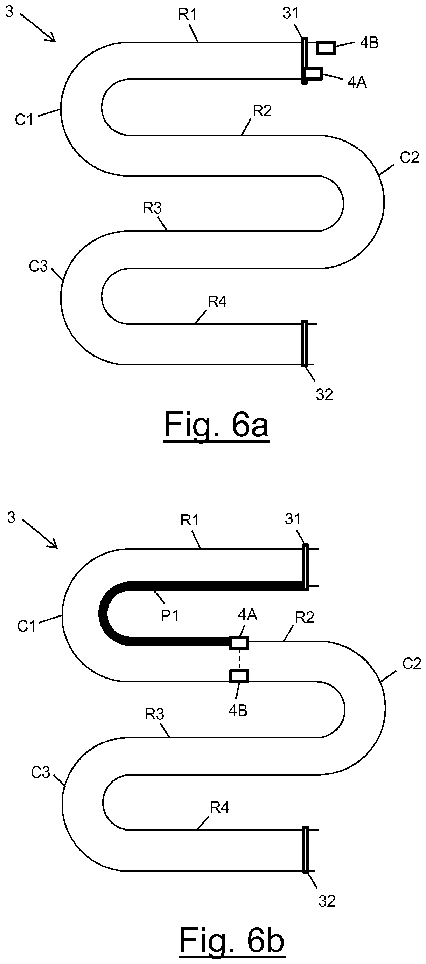

Once the measurement start point 31 has been established, two vehicles 4A and 4B, each of which is provided with a respective on-board device 2A, 2B, are brought close to the measurement start point 31. The vehicle 4A in particular is aligned with the left edge of the carriageway, while the vehicle 4B is aligned with the right edge of the carriageway, as shown schematically in Figure 6a. Each vehicle 4A, 4B will remain on its own side of the carriageway for the entire length of the road section 3.

Since, in the exemplary road section 3, the first curve C1 is to the left, the vehicle 4A - located on the inner edge of the carriageway along the curve C1 - is aligned with the start point 31, while the vehicle 4B is maintained in a backward position with respect to it, as shown schematically in Figure 6a.

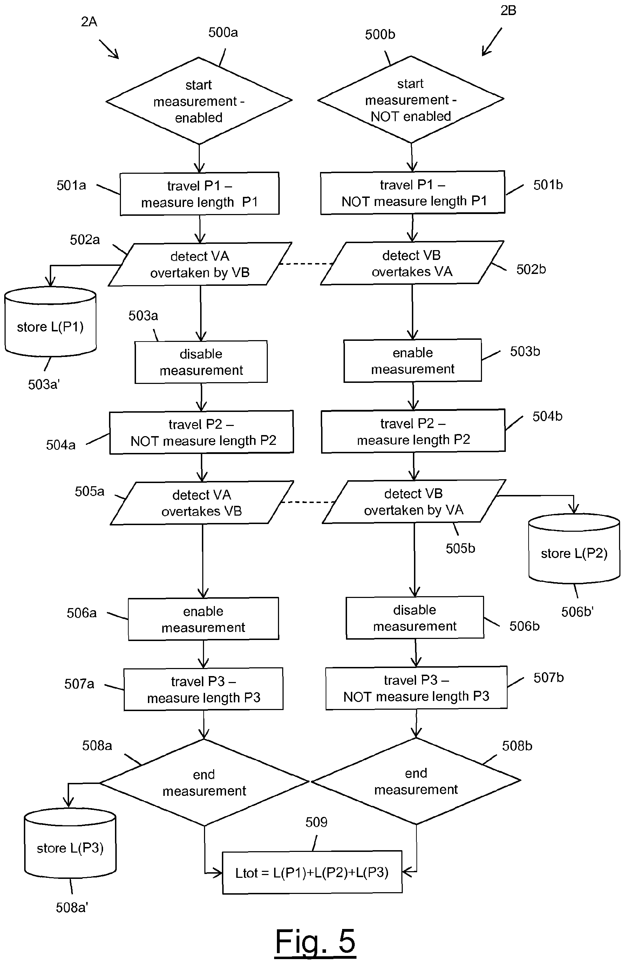

With reference to the flow chart of Figure 5, the measurement of the length of the road section 3 is then started at both on-board devices 2A, 2B (phases 500a, 500b). During the measurement start phase 500a, the measurement of the distance traveled by the vehicle 4A by the traveled distance meter 20A is enabled while, during the measurement start phase 500b, the measurement of the distance traveled by the vehicle 4B by the traveled distance meter 20B is disabled. For each on-board device 2A, 2B, enabling or disabling the traveled distance measurement may, for example, be carried out manually by the operators driving the vehicles 4A, 4B before the vehicles are started from the start point 31, using the graphical interfaces of the user devices 23A, 23B.

The vehicles 4A, 4B are then driven along the respective edges of the carriageway, constantly keeping the vehicle 4A in an advanced position with respect to the vehicle 4B.

Therefore, as shown in Figure 6b, while the vehicle 4A travels a first portion P1 of the road section 3 comprising the straight line R1, the curve C1 and at least a portion of the straight line R2, the traveled distance meter 20A measures the distance L(P1) that vehicle 4A is traveling (phase 501a). At the same time, the vehicle 4B also travels along the portion P1 of the road section, in a backward position than the vehicle 4A (step 501b). However, during step 501b the traveled distance meter 20B does not measure the distance traveled by the vehicle 4B.

In view of the subsequent curve C2 to the right, at any point of the straight line R2, the vehicle 4B overtakes the vehicle 4A, so as to be in an advanced position with respect to it when the two vehicles 4A, 4B are at the beginning of the curve C2.

The overtaking is detected both by the control unit 22A of the on-board device 2A (step 502a), and by the control unit 22B of the on-board device 2B (step 502b).

During the overtaking, in particular, the two photodetectors 211, 212 of the overtaking sensor 21A each detect a laser pulse emitted by the laser source 210 of the overtaking sensor 21B. Since the photodetector 211 precedes the photodetector 212 along the travel direction DM of the vehicle 4A, when the vehicle 4B overtakes the vehicle 4A the laser pulse emitted by the laser source 210 of the overtaking sensor 21B will be detected first by the photodetector 212 and then by the photodetector 211. On the other hand, if it were the vehicle 4A to overtake the vehicle 4B, the laser pulse would first be detected by the photodetector 211 and then by the photodetector 212. The processing unit 22A is therefore able to automatically determine whether the vehicle 4A has been overtaken by the vehicle 4B or if it has overtaken the vehicle 4B according to the order of detection of the laser pulse by the photodetectors 211, 212.

Similarly, during the overtaking, each one of the two photodetectors 211, 212 of the overtaking sensor 21B detects a laser pulse emitted by the laser source 210 of the overtaking sensor 21A. Since the photodetector 211 precedes the photodetector 212 along the travel direction DM of the vehicle 4B, when the vehicle 4B overtakes the vehicle 4A the laser pulse will first be detected by the photodetector 211 and then by the photodetector 212. Vice versa, if the vehicle 4A were overtaking the vehicle 4B, the laser pulse will first be detected by the photodetector 212 and then by the photodetector 211. Also the processing unit 22B is therefore able to automatically determine whether the vehicle 4A has been overtaken by the vehicle 4B or if it has overtaken the vehicle 4B based on the detection order of the laser pulse by photodetectors 211, 212.

In any case, preferably, when each control unit 22A, 22B has detected the overtaking on the basis of the data provided by the respective overtaking sensor 21A, 21B, it preferably requires the operator driving the respective vehicle 4A, 4B to manually confirm the overtaking. This can be done for example through the graphical interface of the user device 23A, 23B. If the operators do not confirm the overtaking, the overtaking is ignored and the two on-board devices 2A, 2B continue to perform steps 501a, 501b. If, on the other hand, the operators confirm the overtaking, the on-board devices 2A, 2B preferably perform the steps described below.

In particular, when the control unit 22A determines (and has preferably had confirmation from the operator) that the vehicle 4A has been overtaken by the vehicle 4B, it preferably disables the measurement of the distance traveled by the vehicle 4A by the traveled distance meter 20A (step 503a) and stores the length L(P1) measured by the traveled distance meter 20A up to the point where the overtaking occurred (step 503a'). On the other hand, when the control unit 22B determines (and has possibly had confirmation from the operator) that the vehicle 4B has overtaken the vehicle 4A, it preferably enables the measurement of the distance traveled by the vehicle 4B by the traveled distance meter 20B (phase 503b).

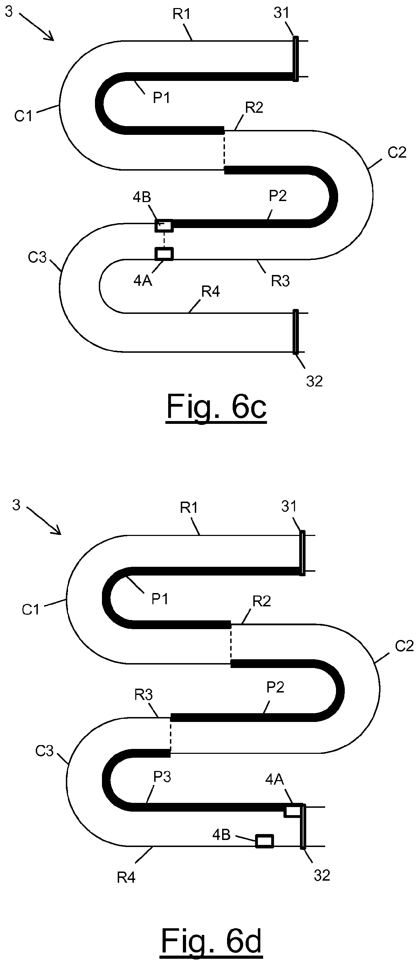

Therefore, as shown in Figure 6c, while the vehicle 4B travels a second portion P2 of the road section 3 comprising a portion of the straight line R2 from the point where the last overtaking occurred, the curve C2 and at least a portion of the straight R3, the traveled distance meter 20B measures the distance L(P2) that the vehicle 4B is traveling (step 504b). At the same time, the vehicle 4A also travels the portion P2 of the road section 3, in a backward position with respect to the vehicle 4B (step 504a). However, during step 504a the traveled distance meter 20A does not make any measurement of the distance traveled by the vehicle 4A.

In view of the next curve C3 to the left, at any point of the straight line R3, the vehicle 4A overtakes the vehicle 4B, so as to be in a more advanced position with respect to it when the two vehicles 4A, 4B are at the beginning of the curve C3.

The overtaking is detected both by the control unit 22A of the on-board device 2A (phase 505a) and by the control unit 22B of the on-board device 2B (phase 505b), as described above.

When the control unit 22A determines (and has eventually received confirmation from the operator) that the vehicle 4A has overtaken the vehicle 4B, it preferably re-enables the measurement of the distance traveled by the vehicle 4A by the traveled distance meter 20A (phase 506a). On the other hand, when the control unit 22B determines (and has possibly been confirmed by the operator) that the vehicle 4B has been overtaken by the vehicle 4A, it preferably disables again the measurement of the distance traveled by the vehicle 4B by the traveled distance meter 20B (step 506b) and memorizes the length L(P2) measured by the traveled distance meter 20B up to the point wherein the overtaking occurred (step 506b').

Therefore, as shown in Figure 6d, while the vehicle 4A travels a third portion P3 of the road section 3 comprising a portion of the straight line R3 from the point where the last overtaking occurred, the curve C3 and at least a portion of the straight line R4, the traveled distance meter 20A measures the distance L(P3) that the vehicle 4A is traveling (step 507a). The vehicle 4B, on the other hand, also follows the portion P3 of the road section 3, in a backward position with respect to the vehicle 4A (step 507b). However, during step 507b the traveled distance meter 20B does not make any measurement of the distance traveled by the vehicle 4B.

Since, in the exemplary considered road section 3, there are no other curves, the measurement ends when the vehicle in an advanced position (i.e. the vehicle 4A) reaches the measurement end-point 32 (steps 508a, 508b), after having traveled the entire straight line R4. For example, the measurement can be manually terminated by the operators on board the vehicles 4A, 4B upon reaching the measurement end point 32, using the graphical interface of the user device 23A, 23B.

Thus, the control unit of the last on-board device with enabled distance measurement (i.e. the control unit 22A) preferably stores the distance L(P3) measured by the traveled distance meter 20A up to the measurement end point 32 (phase 508a'). If other curves were present between the curve C3 and the measurement end point 32, the steps described above would be repeated for each pair of consecutive curves having opposite directions.

It should be noted that, for the entire road section 3, only one on-board device 2A or 2B at a time has the measurement of the distance traveled by the respective vehicle 4A or 4B enabled. The switching between enabled measurement status and disabled measurement status takes place in synchronized mode on the two on-board devices 2A and 2B, and is triggered by the overtaking between vehicles 4A and 4B that each of the two on-board devices 2A and 2B is able to detect independently.

It should also be noted that although in the above description reference has always been made to the case where the on-board device at which the measurement of the traveled distance is enabled is the one on-board the vehicle in an advanced position (i.e. the distance traveled by a vehicle is enabled upon detection that that vehicle has overtaken the other), this is not limitative. According to other embodiments, in fact, the on-board device at which the measurement of the traveled distance is enabled could be the one on board the vehicle in the backward position (i.e. the measurement of the traveled distance by a vehicle is enabled upon detection that that vehicle has been overtaken by the other). In this case, to perform the measurement of the length of the road section according to the aforementioned Decree, it is necessary to drive the two vehicles 4A, 4B so that along each curve the vehicle which is traveling along the inner edge of the curve is in a backward position with respect to the other.

Thus, the length of the road section Ltot is calculated by adding the total distance L(P1) + L(P3) measured by the traveled distance meter 20A and the total distance L(P2) measured by the traveled distance meter 20B (step 509). This calculation can be performed manually or by a computer provided with the total distances measured by each meter 20A, 20B.

The system 1 of the present invention has several advantages.

In fact, it makes it possible to measure the length of the road section 3 without requiring the closure to traffic of the road section, nor the installation of roadside work zones along the road section. To perform the measurement it is indeed sufficient that the two vehicles 4A, 4B with the two installed on-board devices 2A, 2B travel once the road section 3 along the two opposite sides of the carriageway , overtaking each other between curves in opposite directions as described before. This operation can also be carried out under normal traffic conditions on the road section, without any limitation to the circulation of other vehicles (for example lane closure) and without the need to measure at times during which traffic conditions are particularly reduced (for example at night).

Moreover, since carriageway crossings by vehicles 4A, 4B are not necessary (each vehicle travels along its own edge along the entire road section to be measured), no potentially dangerous situations are created for the other vehicles in transit.

## Claims

1. System (1) for measuring the length of a road section (3), comprising two on-board devices (2A, 2B) suitable for being installed each on board a respective vehicle (4A, 4B), each on-board device (2A, 2B) comprising:
- an overtaking sensor (21A, 21B) configured to provide information indicative of any overtaking between the vehicle (4A, 4B) on board of which said on-board device (2A, 2B) is installed and the other vehicle (4B, 4A) on board of which the other on-board device (2B, 2A) of said system (1) is installed;
- a traveled distance meter (20A, 20B) suitable for measuring the distance traveled by said vehicle (4A, 4B); and
- a processing unit (22A, 22B) configured to:
- when it detects a first overtaking between said vehicle (4A, 4B) and said other vehicle (4B, 4A) on the basis of said information provided by said overtaking sensor (21A, 21B), enable a measurement of the distance that said vehicle (4A, 4B) is traveling along said road section (3) by said traveled distance meter (20A, 20B); and
- when it detects a second overtaking opposite to said first overtaking between said vehicle (4A, 4B) and said other vehicle (4B, 4A) on the basis of said information provided by said overtaking sensor (21A, 21B), disable said measurement of the distance that said vehicle (4A, 4B) is traveling along said road section (3) by said traveled distance meter (20A, 20B),
wherein said first overtaking is such that said vehicle (4A, 4B) overtakes said other vehicle (4B, 4A) and said second opposite overtaking is such that said vehicle (4A, 4B) is overtaken by said other vehicle (4B, 4A), or wherein said first overtaking is such that said vehicle (4A, 4B) is overtaken by said other vehicle (4B, 4A) and said second opposite overtaking is such that said vehicle (4A, 4B) overtakes said other vehicle (4B, 4A).

2. System (1) according to claim 1, wherein said overtaking sensor (21A, 21B) comprises:
- a laser source (210) suitable for emitting a laser beam; and
- two photodetectors (211, 212),
said laser source (210) being interposed between said two photodetectors (211, 212) along a horizontal line which, when said on-board device (2A, 2B) is installed on board said vehicle (4A, 4B), is parallel to a direction of travel of said vehicle (4A, 4B).

3. System (1) according to claim 2, wherein said laser beam is a laser blade arranged on a vertical plane.

4. System (1) according to claim 2 or 3, wherein said processing unit (22A, 22B) of each on-board device (2A, 2B) is configured to determine if said vehicle (4A, 4B) has overtaken said other vehicle (4B, 4A) or if said vehicle (4A, 4B) has been overtaken by said other vehicle (4B, 4A) according to the order in which said two photodetectors (211, 212) of the overtaking sensor (21A, 21B) of said on-board device (2A, 2B) detect another laser beam coming from the overtaking sensor (4B, 4A) of the other on-board device (4B, 4A) of said system (1).

5. System (1) according to any one of the preceding claims, wherein each on-board device (2A, 2B) further comprises a respective user device (23A, 23B) provided with a graphical interface through which an operator on board said vehicle (2A, 2B) can interact with said on-board device (2A, 2B).

6. Method for measuring the length of a road section (3), said method comprising driving two vehicles (4A, 4B) provided with respective on-board devices (2A, 2B) along two opposite edges of said road section (3) and, at each on-board device (2A, 2B):
a) detecting any overtaking between the vehicle (4A, 4B) on board of which said on-board device (2A, 2B) is installed and the other vehicle (4B, 4A) on board of which the other on-board device is installed (2B, 2A);
b) when a first overtaking is detected between said vehicle (4A, 4B) and said other vehicle (4B, 4A), enabling a measurement of the distance that said vehicle (4A, 4B) is traveling along said road section (3); and
c) when a second overtaking is detected opposite to said first overtaking between said vehicle (4A, 4B) and said other vehicle (4B, 4A), disabling said measurement of the distance that said vehicle (4A, 4B) is traveling along said road section (3),
wherein said first overtaking is such that said vehicle (4A, 4B) overtakes said other vehicle (4B, 4A) and said second opposite overtaking is such that said vehicle (4A, 4B) is overtaken by said other vehicle (4B, 4A), or wherein said first overtaking is such that said vehicle (4A, 4B) is overtaken by said other vehicle (4B, 4A) and said second opposite overtaking is such that said vehicle (4A, 4B) overtakes said other vehicle (4B, 4A).

7. Method according to claim 6 comprising, before the entry to each curve (C1, C2, C3) of said road section, determining which vehicle between said two vehicles (4A, 4B) is located on the inner edge of said curve (C1 , C2, C3) and drive it to an advanced position with respect to the other vehicle which is on the outer edge of said curve (C1, C2, C3) so as to overtake it, so that:
- the measurement of the distance that the vehicle on said inner edge of said curve (C1, C2, C3) is traveling is enabled; and
- at the same time, the measurement of the distance that the vehicle on said outer edge of said curve (C1, C2, C3) is traveling is disabled.

8. Method according to claim 7, comprising calculating said length of said road section as the sum of the overall distances measured along said road section for said two vehicles (4A, 4B).

9. Method according to any one of claims 6 to 8, wherein said road section is included between two peripheral stations of a system for measuring the average speed of vehicles.

## Patentansprüche

1. System (1) zum Messen der Länge eines Straßenabschnitts (3), mit zwei fahrzeugeigenen Vorrichtungen (2A, 2B), welche jeweils zum Einbau an einem entsprechenden Fahrzeug (4A, 4B) geeignet sind, wobei jede fahrzeugeigene Vorrichtung (2A, 2B) aufweist:
- einen Überholsensor (21A, 21B), welcher zum Erzeugen einer Information ausgebildet ist, welche jedes Überholen zwischen dem Fahrzeug (4A, 4B), an welchem die fahrzeugeigene Vorrichtung (2A, 2B) eingebaut ist, und dem anderen Fahrzeug (4B, 4A) anzeigt, an welchem die andere fahrzeugeigene Vorrichtung (2B, 2A) des Systems (1) eingebaut ist;
- einen Fahrstreckenmesser (20A, 20B), welcher zum Messen der von dem Fahrzeug (4A, 4B) gefahrenen Strecke ausgebildet ist; und
- eine Prozessoreinheit (22A, 22B), welche ausgebildet ist:
- eine Messung der Strecke, welche das Fahrzeug (4A, 4B) entlang des Straßenabschnitts (3) gefahren ist, durch den Fahrstreckenmesser (20A, 20B) zu ermöglichen, wenn es ein erstes Überholen zwischen dem Fahrzeug (4A, 4B) und dem anderen Fahrzeug (4B, 4A) auf Grundlage der von dem Überholsensor (21A, 21B) erzeugten Information erfasst; und
- die Messung der Strecke, welche durch das Fahrzeug (4A, 4B) entlang des Straßenabschnitts (3) gefahren ist, durch den Fahrstreckenmesser (20A, 20B) zu beenden, wenn es ein zweites Überholen, welches zum ersten Überholen entgegengesetzt ist, zwischen dem Fahrzeug (4A, 4B) und dem anderen Fahrzeug (4B, 4A) auf Grundlage der von dem Überholsensor (21A, 21B) erzeugten Information erfasst,
wobei das erste Überholen derart ist, dass das Fahrzeug (4A, 4B) das andere Fahrzeug (4B, 4A) überholt, und das zweite entgegengesetzte Überholen derart ist, dass das Fahrzeug (4A, 4B) durch das andere Fahrzeug (4B, 4A) überholt wird, oder wobei das erste Überholen derart ist, dass das Fahrzeug (4A, 4B) durch das andere Fahrzeug (4B, 4A) überholt wird, und das zweite entgegengesetzte Überholen derart ist, dass das Fahrzeug (4A, 4B) das andere Fahrzeug (4B, 4A) überholt.

2. System (1) nach Anspruch 1,
wobei der Überholsensor (21A, 21B) aufweist:
- eine Laserquelle (210), welche zum Aussenden eines Laserstrahls geeignet ist; und
- zwei Fotodetektoren (211, 212);
Wobei die Laserquelle (210) zwischen den zwei Fotodetektoren (211, 212) entlang einer horizontalen Linie angeordnet ist, welche parallel zu einer Fahrtrichtung des Fahrzeugs (4A, 4B) ist, wenn die fahrzeugeigene Vorrichtung (2A, 2B) an dem Fahrzeug (4A, 4B) eingebaut ist.

3. System (1) nach Anspruch 2,
wobei der Laserstrahl ein Laservorhang ist, welcher in einer vertikalen Ebene angeordnet ist.

4. System (1) nach Anspruch 2 oder 3,
wobei die Prozessoreinheit (22A, 22B) von jeder fahrzeugeigenen Vorrichtung (2A, 2B) zum Ermitteln ausgebildet ist, wenn das Fahrzeug (4A, 4B) das andere Fahrzeug (4B, 4A) überholt hat oder wenn das Fahrzeug (4A, 4B) durch das andere Fahrzeug (4B, 4A) gemäß der Reihenfolge überholt worden ist, in welcher die zwei Fotodetektoren (211, 212) des Überholsensors (21A, 21B) der fahrzeugeigenen Vorrichtung (2A, 2B) einen anderen Laserstrahl erfassen, welcher von dem Überholsensor (4B, 4A) der anderen fahrzeugeigenen Vorrichtung (4B, 4A) des Systems (1) kommt.

5. System (1) nach einem der vorhergehenden Ansprüche,
wobei jede fahrzeugeigene Vorrichtung (2A, 2B) weiter eine entsprechende Nutzervorrichtung (23A, 23B) aufweist, welche mit einem grafischen Interface versehen ist, durch welches ein Bediener in dem Fahrzeug (2A, 2B) mit der fahrzeugeigenen Vorrichtung (2A, 2B) interagieren kann.

6. Verfahren zum Messen der Länge eines Straßenabschnitts (3), umfassend ein Fahren von zwei Fahrzeugen (4A, 4B) mit jeweils fahrzeugeigenen Vorrichtungen (2A, 2B) entlang von zwei gegenüberliegenden Rändern des Straßenabschnitts (3) und an jeder fahrzeugeigenen Vorrichtung (2A, 2B):
a) Erfassen von jedem Überholen zwischen dem Fahrzeug (4A, 4B), an welchem die fahrzeugeigene Vorrichtung (2A, 2B) eingebaut ist, und dem anderen Fahrzeug (4B, 4A), an welchem die andere fahrzeugeigene Vorrichtung (2B, 2A) eingebaut ist,
b) Ermöglichen einer Messung der Strecke, welche das Fahrzeug (4A, 4B) entlang des Straßenabschnitts (3) gefahren ist, wenn ein erstes Überholen zwischen dem Fahrzeug (4A, 4B) und dem anderen Fahrzeug (4B, 4A) erfasst wird, und
c) Beenden der Messung der Strecke, welche das Fahrzeug (4A, 4B) entlang des Straßenabschnitts (3) zurückgelegt hat, wenn ein zweites Überholen entgegengesetzt zum ersten Überholen zwischen dem Fahrzeug (4A, 4B) und dem anderen Fahrzeug (4B, 4A) erfasst wird,
wobei das erste Überholen derart ist, dass das Fahrzeug (4A, 4B) das andere Fahrzeug (4B, 4A) überholt, und das zweite entgegengesetzte Überholen derart ist, dass das Fahrzeug (4A, 4B) durch das andere Fahrzeug (4B, 4A) überholt wird, oder wobei das erste Überholen derart ist, dass das Fahrzeug (4A, 4B) durch das andere Fahrzeug (4B, 4A) überholt wird, und das zweite entgegengesetzte Überholen derart ist, dass das Fahrzeug (4A, 4B) das andere Fahrzeug (4B, 4A) überholt.

7. Verfahren nach Anspruch 6, mit
vor einem Eintritt in jede Kurve (C1, C2, C3) des Straßenabschnitts Ermitteln, welches der zwei Fahrzeuge (4A, 4B) an dem Innenrand der Kurve (C1, C2, C3) angeordnet ist, und Fahren dieses Fahrzeuges zu einer vorderen Position in Bezug auf das andere Fahrzeug, welches sich an dem Außenrand der Kurve (C1, C2, C3) befindet, um dieses zu überholen, so dass:
- die Messung der Strecke ermöglicht wird, welche das Fahrzeug an dem Innenrand der Kurve (C1, C2, C3) zurückgelegt hat, und
- gleichzeitiges Beenden der Messung der Strecke, welche das Fahrzeug an dem Außenrand der Kurve (C1, C2, C3) zurückgelegt hat.

8. Verfahren nach Anspruch 7,
mit Berechnen der Länge des Straßenabschnitts als eine Summe der gesamten Strecken, welche entlang des Straßenabschnitts für die zwei Fahrzeuge (4A, 4B) gemessen wurden.

9. Verfahren nach einem der Ansprüche 6 bis 8,
wobei der Straßenabschnitt zwischen zwei Periperiestationen eines Systems zum Messen einer Durchschnittsgeschwindigkeit der Fahrzeuge enthalten ist.

## Revendications

1. Système (1) destiné à mesurer la longueur d'une section de route (3), comprenant deux dispositifs embarqués (2A, 2B) aptes à être installés chacun à bord d'un véhicule respectif (4A, 4B), chaque dispositif embarqué (2A, 2B) comprenant :
- un capteur de dépassement (21A, 21B) configuré de manière à fournir des informations indicatives d'un quelconque dépassement entre le véhicule (4A, 4B) à bord duquel est installé ledit dispositif embarqué (2A, 2B) et l'autre véhicule (4B, 4A) à bord duquel est installé l'autre dispositif embarqué (2B, 2A) dudit système (1) ;
- un compteur de distance parcourue (20A, 20B) apte à mesurer la distance parcourue par ledit véhicule (4A, 4B) ; et
- une unité de traitement (22A, 22B) configurée de manière à :
- lorsqu'elle détecte un premier dépassement entre ledit véhicule (4A, 4B) et ledit autre véhicule (4B, 4A) sur la base desdites informations fournies par ledit capteur de dépassement (21A, 21B), activer une mesure de la distance parcourue par ledit véhicule (4A, 4B) le long de ladite section de route (3), par ledit compteur de distance parcourue (20A, 20B) ; et
- lorsqu'elle détecte un second dépassement opposé audit premier dépassement entre ledit véhicule (4A, 4B) et ledit autre véhicule (4B, 4A) sur la base desdites informations fournies par ledit capteur de dépassement (21A, 21B), désactiver ladite mesure de la distance parcourue par ledit véhicule (4A, 4B) le long de ladite section de route (3) par ledit compteur de distance parcourue (20A, 20B) ;
dans lequel ledit premier dépassement est tel que ledit véhicule (4A, 4B) dépasse ledit autre véhicule (4B, 4A), et ledit second dépassement opposé est tel que ledit véhicule (4A, 4B) est dépassé par ledit autre véhicule (4B, 4A), ou dans lequel ledit premier dépassement est tel que ledit véhicule (4A, 4B) est dépassé par ledit autre véhicule (4B, 4A) et ledit second dépassement opposé est tel que ledit véhicule (4A, 4B) dépasse ledit autre véhicule (4B, 4A).

2. Système (1) selon la revendication 1, dans lequel ledit capteur de dépassement (21A, 21B) comprend :
- une source laser (210) apte à émettre un faisceau laser ; et
- deux photodétecteurs (211, 212) ;
ladite source laser (210) étant interposée entre lesdits deux photodétecteurs (211, 212) le long d'une ligne horizontale qui, lorsque ledit dispositif embarqué (2A, 2B) est installé à bord dudit véhicule (4A, 4B), est parallèle à une direction de déplacement dudit véhicule (4A, 4B).

3. Système (1) selon la revendication 2, dans lequel ledit faisceau laser est une lame laser agencée sur un plan vertical.

4. Système (1) selon la revendication 2 ou 3, dans lequel ladite unité de traitement (22A, 22B) de chaque dispositif embarqué (2A, 2B) est configurée de manière à déterminer si ledit véhicule (4A, 4B) a dépassé ledit autre véhicule (4B, 4A), ou si ledit véhicule (4A, 4B) a été dépassé par ledit autre véhicule (4B, 4A), selon l'ordre dans lequel lesdits deux photodétecteurs (211, 212) du capteur de dépassement (21A, 21B) dudit dispositif embarqué (2A, 2B) détectent un autre faisceau laser provenant du capteur de dépassement (4B, 4A) de l'autre dispositif embarqué (4B, 4A) dudit système (1).

5. Système (1) selon l'une quelconque des revendications précédentes, dans lequel chaque dispositif embarqué (2A, 2B) comprend en outre un dispositif utilisateur respectif (23A, 23B) doté d'une interface graphique par le biais de laquelle un opérateur à bord dudit véhicule (2A, 2B) peut interagir avec ledit dispositif embarqué (2A, 2B).

6. Procédé de mesure de la longueur d'une section de route (3), ledit procédé comprenant la conduite de deux véhicules (4A, 4B) dotés de dispositifs embarqués respectifs (2A, 2B) le long de deux bords opposés de ladite section de route (3) et, au niveau de chaque dispositif embarqué (2A, 2B), le procédé comprenant les étapes ci-dessous consistant à :
a) détecter un quelconque dépassement entre le véhicule (4A, 4B) à bord duquel est installé ledit dispositif embarqué (2A, 2B) et l'autre véhicule (4B, 4A) à bord duquel est installé l'autre dispositif embarqué (2B, 2A) ;
b) lorsqu'un premier dépassement est détecté entre ledit véhicule (4A, 4B) et ledit autre véhicule (4B, 4A), activer une mesure de la distance parcourue par ledit véhicule (4A, 4B) le long de ladite section de route (3) ; et
c) lorsqu'un second dépassement est détecté, lequel est opposé audit premier dépassement, entre ledit véhicule (4A, 4B) et ledit autre véhicule (4B, 4A), désactiver ladite mesure de la distance parcourue par ledit véhicule (4A, 4B) le long de ladite section de route (3) ;
dans lequel ledit premier dépassement est tel que ledit véhicule (4A, 4B) dépasse ledit autre véhicule (4B, 4A), et ledit second dépassement opposé est tel que ledit véhicule (4A, 4B) est dépassé par ledit autre véhicule (4B, 4A), ou dans lequel ledit premier dépassement est tel que ledit véhicule (4A, 4B) est dépassé par ledit autre véhicule (4B, 4A) et ledit second dépassement opposé est tel que ledit véhicule (4A, 4B) dépasse ledit autre véhicule (4B, 4A).

7. Procédé selon la revendication 6, comprenant l'étape consistant à, avant l'entrée dans chaque virage (C1, C2, C3) de ladite section de route, déterminer quel véhicule, entre lesdits deux véhicules (4A, 4B), est situé sur le bord intérieur dudit virage (C1, C2, C3), et conduire ce dernier vers une position avancée par rapport à l'autre véhicule qui est situé sur le bord extérieur dudit virage (C1, C2, C3), de manière à le dépasser, de sorte que :
- la mesure de la distance parcourue par le véhicule sur ledit bord intérieur dudit virage (C1, C2, C3) est activée ; et
- simultanément, la mesure de la distance parcourue par le véhicule sur ledit bord extérieur dudit virage (C1, C2, C3) est désactivée.

8. Procédé selon la revendication 7, comprenant l'étape consistant à calculer ladite longueur de ladite section de route comme étant la somme des distances globales mesurées le long de ladite section de route pour lesdits deux véhicules (4A, 4B).

9. Procédé selon l'une quelconque des revendications 6 à 8, dans lequel ladite section de route est incluse entre deux stations périphériques d'un système destiné à mesurer la vitesse moyenne des véhicules.
